Europäisches Patentamt

European Patent Office

Office européen des brevets

(19)

(11) Veröffentlichungsnummer : **0 343 337 B1**

(12) **EUROPÄISCHE PATENTSCHRIFT**

(45) Veröffentlichungstag der Patentschrift :
**01.07.92 Patentblatt 92/27**

(21) Anmeldenummer : **89104892.8**

(22) Anmeldetag : **18.03.89**

(51) Int. Cl.⁵ : $B23B\ 31/16$

(54) **Vorrichtung zur lösbaren Befestigung eines Werkstückträgers an einem Adaptionsglied.**

(30) Priorität : **27.05.88 DE 3817991**

(43) Veröffentlichungstag der Anmeldung :
**29.11.89 Patentblatt 89/48**

(45) Bekanntmachung des Hinweises auf die
Patenterteilung :
**01.07.92 Patentblatt 92/27**

(84) Benannte Vertragsstaaten :
**DE FR GB IT**

(56) Entgegenhaltungen :
**DE-A- 1 602 774
DE-A- 2 045 578
DE-C- 3 540 367
US-A- 3 610 645
US-A- 4 570 949**

(73) Patentinhaber : **SMW Schneider & Weisshaupt GmbH
Wiesentalstrasse 28
W-7996 Meckenbeuren (DE)**

(72) Erfinder : **Hiestand, Karl
Mühlweg 2
W-7798 Pfullendorf (DE)**

(74) Vertreter : **Engelhardt, Guido, Dipl.-Ing.
Patentanwalt Montafonstrasse 35 Postfach 1350
W-7990 Friedrichshafen 1 (DE)**

EP 0 343 337 B1

## Beschreibung

Die Erfindung bezieht sich auf eine Vorrichtung zur lösbaren Befestigung eines Werkstückträgers an einem Adaptionsglied, beispielsweise eines Spannfutters an der Drehspindel einer Werkzeugmaschine, mittels in dem Adaptionsglied radial verstellbar geführter Spannbolzen, die durch ein axial verschiebbares Stellglied über Schrägflächen oder dgl. in eine in den Werkstückträger eingearbeitete ringnutförmig ausgebildete Hinterschneidung einführbar sind.

Durch die DE-PS 35 40 367 ist eine Vorrichtung dieser Art bekannt. Um hierbei mit Hilfe der senkrecht zur Längsachse des Adaptionsgliedes angeordneten Spannbolzen eine axial gerichtete Zugkraft auf den Werkstückträger ausüben zu können, damit dieser auf einem an dem Adaptionsglied angearbeiteten Aufspannkegel gezogen wird, sind an den Spannbolzen und der Hinterschneidung des Werkstückträgers in Achsrichtung geneigte Schrägflächen angearbeitet. Auf diese Weise kann zwar der Werkstückträger durch eine Radialverstellung der Spannbolzen axial zu dem Adaptionsglied hinbewegt und somit auf dessen Aufspannkegel aufgepreßt werden, da, bedingt durch die Schrägflächen, aber auch eine hohe nach außen gerichtete Kraftkomponente auftritt, wird der Werkstückträger im Bereich der Hinterschneidungen aufgeweitet und von der Anlagefläche weggedrückt, so daß dessen Halterung auf dem Adaptionsglied beeinträchtigt und oftmals eine exakte Abstützung nicht mehr gegeben ist. Außerdem ist die Bearbeitung der Schrägflächen an dem Werkstückträger und den Spannbolzen, da diese äußerst genau aufeinander abgestimmt sein müssen, um rundum eine gleichmäßige Verteilung der Spannkraft sicherzustellen, mit einem großen Fertigungsaufwand verbunden.

Aufgabe der Erfindung ist es daher, eine Vorrichtung zur lösbaren Befestigung eines Werkstückträgers an einem Adaptionsglied der vorgenannten Art zu schaffen, mittels der es möglich ist, einen Werkstückträger mit hoher Spannkraft an einem Adaptionsglied anzudrücken, ohne daß dabei nach außen gerichtete Kräfte auftreten, durch die die Anlage ungünstig beeinflußt wird. Die Bearbeitung der zusammenwirkenden Flächen soll hierbei ohne großen Fertigungsaufwand zu bewerkstelligen sein, auch soll bei der Rückführung der Spannbolzen der Werkstückträger selbsttätig von dem Adaptionsglied gelöst werden, so daß in kurzer Zeit und ohne Schwierigkeiten ein Wechsel des Werkstückträgers vorgenommen werden kann.

Gemäß der Erfindung wird dies dadurch erreicht, daß die Spannbolzen in Achsrichtung des Adaptionsgliedes geneigt in diesem angeordnet sind, derart, daß deren innere Enden in Richtung des Werkstückträgers gegenüber den äußeren Enden vorstehen, daß die Spannbolzen auf der dem Werkstückträger abgewandten Seite jeweils eine senkrecht zur Längsachse des Adaptionsgliedes verlaufende Anlagefläche aufweisen und daß die Hinterschneidung des Werkstückträgers mit einer parallel zu den Anlageflächen des Spannbolzens verlaufenden Gegenfläche versehen ist.

Zweckmäßig ist es hierbei, die Spannbolzen unter einem Winkel $\alpha$ von 75° bis 80° zur Längsachse des Adaptionsgliedes gneigt in diesem anzuordnen und deren Anlageflächen jeweils durch eine in die äußeren Enden eingearbeitete vorzugsweise winkelförmigen Freisparung zu bilden.

Um ein selbsttätiges Lösen des Werkstückträgers bei der Rückstellung der Spannbolzen vornehmen zu können, ist das Adaptionsglied mit auf der dem Werkstückträger zugewandten Seite angeordnete und auf diesen einwirkende Abdrückglieder zu versehen, die mittels an den Spannbolzen angearbeiteten und entgegengesetzt zu deren Längsachse geneigt verlaufenden Druckflächen bei der Rückstellbewegung der Spannbolzen über die Anlagefläche des Adaptionsgliedes vorschiebbar sind.

Die Abdrückglieder können hierbei in einfacher Ausgestaltung als abgesetzte zylindrische Bolzen ausgebildet und in achsparallelen Bohrungen des Adaptionsgliedes eingesetzt werden.

Wird eine Vorrichtung zur lösbaren Befestigung eines Werkstückträgers an einem Adaptionsglied gemäß der Erfindung ausgebildet, so ist es nicht nur möglich, die zusammenwirkenden und aufeinander abzustimmenden Flächen an den Spannbolzen und dem Werkstückträger auf sehr einfache Weise zu bearbeiten, sondern es ist auch sichergestellt, daß keine nach außen gerichteten Kraftkomponenten auftreten, durch die der Werkstückträger im Bereich des an dem Adaptionsglied zu befestigenden Flansches aufgeweitet und die Verbindung zwischen diesen Teilen beeinträchtigt wird. Werden nämlich die Spannbolzen in Achsrichtung des Adaptionsgliedes geneigt in diesem angeordnet, so können die an diesen und dem Werkstückträger angearbeiteten Spannflächen senkrecht zur Längsachse des Adaptionsgliedes verlaufen, dennoch wird durch eine Radialverschiebung der Spannbolzen eine hohe axial gerichtete Spannkraft erzeugt, mittels der der Werkstückträger auf den Aufnahmekegel des Adaptionsgliedes gezogen und mit diesem fest verspannt wird. Es ist demnach stets eine gute Anlage des Werkstückträgers, ohne daß dieser aufgeweitet wird oder besonders steif gestaltet sein muß und ohne daß die Halterung durch die Spannbolzen ungünstig beeinflußt wird, gewährleistet. Und da außerdem durch die Spannbolzen betätigbare Abdrückglieder vorgesehen sind, wird der Werkstückträger beim Lösen der Verbindung durch die Rückstellbewegung der Spannbolzen selbsttätig geringfügig von dem Adaptionsglied abgedrückt, in kurzer Zeit ist demnach ohne Schwierigkeiten ein Wechsel eines Werkstückträgers mit Hilfe der vorschlagsgemäß ausgebildeten Vorrichtung zu bewerkstelligen.

2

In der Zeichnung ist ein Ausführungsbeispiel der gemäß der Erfindung ausgebildeten Vorrichtung zur lösbaren Befestigung eines Werkstückträgers an einem Adaptionsglied dargestellt, das nachfolgend im einzelnen erläutert ist. Hierbei zeigt, jeweils in einem Axialschnitt,

Figur 1 die an einer Drehspindel einer Werkzeugmaschine angebaute Vorrichtung ohne Werkstückträger,

Figur 2 den mit Hilfe der Vorrichtung nach Figur 1 an dem Adaptionsglied zu befestigenden Werkstückträger und

Figur 3 den an dem Adaptionsglied der Vorrichtung nach Figur 1 verspannten Werkstückträger.

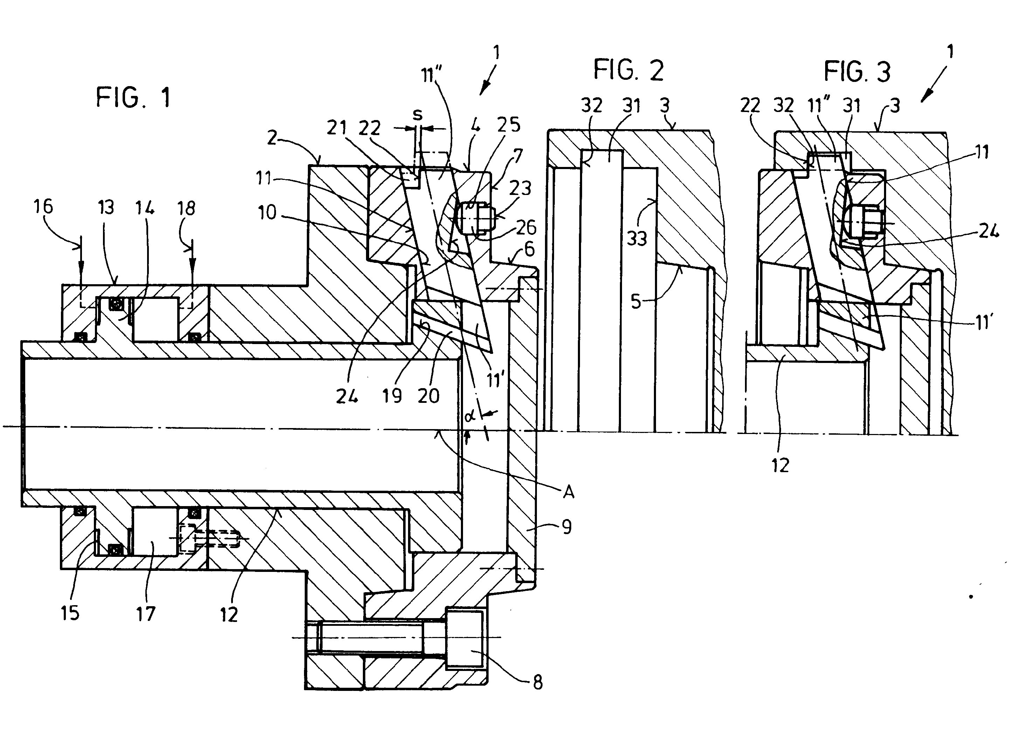

Die in den Figuren 1 und 3 dargestellte und mit 1 bezeichnete Vorrichtung dient zur lösbaren Befestigung eines Werkstückträgers 3 an einem Adaptionsglied 4, das mittels Schrauben 8 an einer Drehspindel 2 einer Werkzeugmaschine befestigt ist. Der Werkstückträger 3, beispielsweise ein Kraftspannfutter, und das Adaptionsglied 4 sind, um auf einfache Weise eine Zentrierung und Lagerung zu ermöglichen, mit einander zugeordneten kegeligen Flächen 5 und 6 ausgestattet, so daß der Werkstückträger 3 auf der Fläche 6 des durch einen Deckel 9 verschlossenen Adaptionsgliedes 4 aufgespannt werden kann.

Um eine sichere Verspannung zu bewerkstelligen, sind in in das Adaptionsglied 4 eingearbeiteten Führungen 10 gleichmäßig über den Umfang verteilt Spannbolzen 11 eingesetzt, die an ihren inneren Enden 11′ jeweils mittels eines Keilhakens 20 mit einer an einem Stellglied 12 angeordneten Schrägfläche 19 zusammenwirken. Das Stellglied 12 ist als Zugstange ausgebildet und mit einem Kolben 14 versehen, der in einen Zylinder 13 eingesetzt ist. Wird hierbei über die Druckleitung 16 dem Druckraum 15 Druckmittel zugeführt, so wird der Kolben 14 nach rechts verschoben und die Spannbolzen 11 werden, da die Axialverschiebung des Stellgliedes 12 mittels der Schrägflächen 19 und der Keilhaken 20 umgelenkt wird, radial nach außen verstellt, bei einer Druckmittelzuführung über die Leitung 18 in den Druckraum 17 werden dagegen die Spannbolzen 11 in die in Figur 1 dargestellte Ausgangslage zurückgeführt.

Zur Verspannung des Werkstückträgers 3 mit dem Adaptionsglied 4 greifen die Spannbolzen 11 mit ihren äußeren Enden 11″, wie dies in Figur 3 gezeigt ist, in eine in den Werkstückträger 3 eingearbeitete Hinterschneidung 31 ein, die als Ringnut ausgebildet ist. Und damit bei der Verstellbewegung der Spannbolzen 11 eine axial gerichtete Zugkraft auf den Werkstückträger 3 ausgeübt werden kann, sind die Spannbolzen 11 unter einem Winkel $\alpha$ von beispielsweise 78° zur Längsachse A des Adaptionsgliedes 4 geneigt in den Führungen 10 angeordnet und an ihrem äußeren Ende 11′ jeweils mit einer achssenkrecht gerichteten Anlagefläche 22 versehen, die mit einer ebenfalls achssenkrechten Gegenfläche 32 des Werkstückträgers 3 zusammenwirken.

Durch die Radialverschiebung der Spannbolzen 11 werden somit, wie dies in Figur 1 strichpunktiert eingezeichnet ist, die durch eine Freisparung 21 geschaffenen Anlageflächen 22 der Spannbolzen 21 um eine Wegstrecke s in axialer Richtung versetzt und auf den Werkstückträger 3 wirkt somit, da die Spannbolzen 11 auf die Gegenfläche 32 drücken, eine hohe axial gerichtete Zugkraft ein, ohne daß dabei durch Schrägflächen bedingte nach außen gerichtete Kraftkomponenten auftreten. Durch die Spannbolzen 11 wird der Werkstückträger 3 im Bereich der Hinterschneidung 31 demnach nicht aufgeweitet, auch muß dieser nicht besonders steif ausgebildet werden, vielmehr ist eine stets zufriedenstellende und rasch lösbare Befestigung auf dem Adaptionsglied 4 gewährleistet.

Um ein selbsttätiges Lösen des Werkstückträgers 3 bei der Rückstellbewegung der Spannbolzen 11 zu ermöglichen, sind durch diese zu betätigende Abdrückglieder 23 vorgesehen, die jeweils aus einem in einer axial gerichteten Bohrung 25 eingesetzten Bolzen 26 bestehen. Und zur Betätigung der Abdrückglieder 23 sind an den Spannbolzen 11 Druckflächen 24 angearbeitet, die entgegengesetzt zu diesen geneigt verlaufen. Die Druckflächen 24 sind hierbei derart ausgelegt, daß die Abdrückglieder 23 bei der Rückstellbewegung der Spannbolzen 11 geringfügig über die achssenkrechte Anlagefläche 7 des Adaptionsgliedes 4 vorschiebbar sind und somit auf die Gegenfläche 33 des Werkstückträgers 3 einwirken, so daß dieser von dem Adaptionsglied 4 gelöst wird und ohne Schwierigkeiten abgenommen werden kann.


## Patentansprüche

1. Vorrichtung zur lösbaren Befestigung eines Werkstückträgers (3) an einem Adaptionsglied (4), beispielsweise eines Spannfutters an der Drehspindel einer Werkzeugmaschine, mittels in dem Adaptionsglied (4) radial verstellbar geführter Spannbolzen (11), die durch ein axial verschiebbares Stellglied (12) über Schrägflächen oder dgl. in eine in den Werkstückträger eingearbeitete ringnutförmig ausgebildete Hinterschneidung (31) einführbar sind,

**dadurch gekennzeichnet,**

daß die Spannbolzen (11) in Achsrichtung (A) des Adaptionsgliedes (4) geneigt in diesem angeordnet sind, derart, daß deren innere Enden (11′) in Richtung des Werkstückträgers (3) gegenüber den äußeren Enden (11″) vorstehen, daß die Spannbolzen (11) auf der dem Werkstückträger (3) abgewandten Seite jeweils eine senkrecht zur Längsachse (A) des Adaptionsgliedes (4) verlaufende Anlagefläche (22) aufweisen und daß die Hinterschneidung (Ringnut 31) des Werkstückträgers (3) mit einer parallel zu den Anlageflächen (22) des Spannbolzens (11) verlaufenden Gegenfläche (32) versehen ist.

2. Vorrichtung nach Anspruch 1,
**dadurch gekennzeichnet,**
daß die Spannbolzen (11) unter einem Winkel α von 75° bis 80° zur Längsachse (A) des Adaptionsgliedes (4) geneigt in diesem angeordnet sind.

3. Vorrichtung nach Anspruch 1 oder 2,
**dadurch gekennzeichnet,**
daß die Anlageflächen (22) der Spannbolzen (11) jeweils durch eine in deren äußeren Enden (11′) eingearbeitete vorzugsweise winkelförmigen Freisparung (21) gebildet sind.

4. Vorrichtung nach einem oder mehreren der Ansprüche 1 bis 3,
**dadurch gekennzeichnet,**
daß das Adaptionsglied (4) mit auf der dem Werkstückträger (3) zugewandten Seite angeordnete und auf diesen einwirkende Abdrückglieder (23) versehen ist, die mittels an den Spannbolzen (11) angearbeiteten und entgegengesetzt zu deren Längsachse geneigt verlaufenden Druckflächen (24) bei der Rückstellbewegung der Spannbolzen (11) über die Anlagefläche (7) des Adaptionsgliedes (4) vorschiebbar sind.

5. Vorrichtung nach Anspruch 4,
**dadurch gekennzeichnet,**
daß die Abdrückglieder (23) als abgesetzte zylindrische Bolzen (26) ausgebildet und in achsparallelen Bohrungen (25) des Adaptionsgliedes (4) eingesetzt sind.

## Claims

1. Device for the detachable fastening of a work piece support (3) to an adapter (4), for example a chuck on the rotating spindle of a machine tool, employing for this radially adjustable clamping pins (11) in the adapter member (4) which can locate in an annular undercut (31) arranged in the work piece support (3) by means of an axially adjustable actuator (12) sliding across tapered or similar faces,
**characterized in that**
the clamping pins (11) are arranged in the adapter member (4), aligned down axis (A) of same in such a way that their inside ends (11′), relative to the outside ends (11″), protrude towards the work piece support (3), also in that each of the clamping pins (11) has a locating face on the side facing away from the work piece support (3) and set at right angles to the longitudinal axis (A) of the adapter member (4), and in that the undercut (annular groove 31) in the work piece support (3) is arranged with a mating face (32) set parallel to the locating faces (22) of the clamping pins (11).

2. Device as claimed in claim 1,
**characterized in that**
the clamping pins (11) are arranged in the adapter (4) at an angle of 75° to 80° relative to longitudinal axis (A) of said adapter.

3. Device as claimed in claim 1 or 2,
**characterized in that**
all the locating faces (22) of clamping pins (11) are arranged with a recess (21) in their outside ends (11′), said recess being preferably angular.

4. Device as claimed in one or more of claims 1 to 3,
**characterized in that**
the adapter (4) is equipped with forcing members (23) arranged on the side facing the work piece support (3) which act on said support, whereby these members can, when the clamping pins (11) retract, be advanced in a sliding fashion along the locating face (7) of the adapter member (4) by means of pressure faces arranged on said clamping pins (11) at right angles to the longitudinal axis of these pins.

5. Device as claimed in claim 4,
**characterized in that**
the forcing members (23) are arranged as offset cylindrical pins (26) in parallel bores (25) of the adapter member (4).

## Revendications

1. Dispositif pour la fixation desserrable d'un support d'outil (3) sur un élément d'adaptation (4), par exemple un mandrin de serrage sur la broche d'une machine-outil, à l'aide de boulons de serrage (11) radialement déplaçables dans l'élément d'adaptation (4), et qui, grâce à un élément de réglage axialement déplaçable (12) et des profils obliques ou similaires, se laissent introduire dans une contre-dépouille sous forme d'une gorge annulaire (31),
se caractérisant par le fait que
les boulons de serrage (11) sont inclinés en direction axiale (A) de l'élément d'adaptation (4) et montés dans celui-ci de sorte que leurs extrémités intérieures (11') saillent par rapport aux extrémités extérieures (11") en direction du support d'outil (3), que sur la face opposée à celle orientée vers le support d'outil (3), les boulons de serrage (11) sont munis respectivement d'une face de portée (22) dirigée perpendiculairement à l'axe longitudinal (A) de l'élément d'adaptation (4) et que la contre-dépouille (gorge annulaire 31) du support d'outil (3) est munie d'une contre-surface (32) orientée parallèlement aux faces de portée (22) du boulon de serrage (11).

2. Dispositif d'après la revendication 1,
se caractérisant par le fait que
les boulons de serrage (11) sont inclinés sous un angle $\alpha$ de 75° à 80° par rapport à l'axe longitudinal (A) de l'élément d'adaptation (4).

3. Dispositif d'après les revendications 1 ou 2,
se caractérisant par le fait que
les faces de portée (22) des boulons de serrage (11) sont formées respectivement par un évidement (21) de préférence angulaire, pratiqué dans leurs extrémités extérieures (11').

4. Dispositif d'après une ou plusieurs des revendications 1 à 3,
se caractérisant par le fait que
l'élément d'adaptation (4) est muni, sur la face dirigée vers le support d'outil (3), d'appuis (23) agissant sur le support et qui, lors du rappel des boulons de serrage (11), se laissent déplacer sur la face de portée (7) de l'élément d'adaptation (4) par l'intermédiaire des faces d'appui (24) pratiquées sur les boulons de serrage (11) et inclinées en direction opposée à leur axe longitudinal.

5. Dispositif d'après la revendication 4,
se caractérisant par le fait que
les appuis (23) sont formés par des boulons cylindriques saillants (26) insérés dans des alésages (25) qui, de leur part, sont pratiqués parallèlement à l'axe de l'élément d'adaptation (4).

FIG. 1

FIG. 2

FIG. 3

EP 0 343 337 B1